# EUROPEAN PATENT SPECIFICATION

(11) **EP 0 692 892 B1**
(45) Date of publication and mention of the grant of the patent: **16.04.2003**
(21) Application number: 95201884.4
(22) Date of filing: 10.07.1995
(51) Int. Cl.: H04L 12/56, H04Q 11/04

(54) **Method and equipment for the real time management of resources in a virtual private network in ATM technique**
Verfahren und Ausrüstung zur Echtzeitverwaltung von Kommunikationsmitteln in einem virtuellen Privatnetz in ATM-Technik
Méthode et équipement pour la gestion de ressources en temps réel dans un réseau privé virtuel en technique ATM

(30) Priority: 14.07.1994 IT MI941481
(43) Date of publication of application: 17.01.1996
(73) Proprietor: Italtel S.p.a., 20154 Milano (IT); Siemens Mobile Communications S.p.A., 20126 Milano (IT)
(72) Inventor: Rigolio, Giancarlo, I-21013 Gallarate VA (IT); Gallassi, Giorgio, I-20010 Cornaredo MI (IT); Daniele, Antonella, I-20010 Bareggio MI (IT); Campagna, Riccardo, I-20146 Milano (IT); Canato, Luigi, I-20036 Meda MI (IT)
(74) Representative: Giustini, Delio

(56) References cited:
- EP-A- 0 413 488
- EP-A- 0 448 073
- EP-A- 0 471 379
- WALTERS S M ET AL: "BROADBAND VIRTUAL PRIVATE NETWORKS AND THEIR EVOLUTION" PROCEEDINGS OF THE INTERNATIONAL SWITCHING SYMPOSIUM, YOKOHAMA, OCT. 25 - 30, 1992, vol. VOL. 2, no. SYMP. 14, 25 October 1992, INSTITUTE OF ELECTRONICS;INFORMATION AND COMMUNICATION ENGINEERS, pages 86-90, XP000337701

## Description

### Field of the Invention

The present invention relates in general to communication systems employing the digital technique called fast cell switching or Asynchronous Transfer Mode (ATM), for the transport of voice and video signals and data.

More in particular, the invention relates a method and an equipment for the real time management of resources in a virtual private network according to the ATM technique.

In the field of communications, the need of broadband private networks capable to connect users' local networks located in places also distant among them forming a unique private network, is ever increasing.

The ATM technique has an ever higher importance in the control of the integrated switching of digital signal flows belonging to services for the transmission of voice and video signals and data, with different bandwidth requirements and traffic characteristics differentiate among the different services.

The ATM technique foresees in particular that information relevant to the different services are organized in information units having 53 bytes fixed length, called cells. These cells contain, besides actual user's data, a header carrying the information necessary to the geographical routing of the cell itself through the network.

The fact that the cells contain the information required to define the call they belong to and therefore, implicitly, a reference to all the call characteristics, involve the possibility to control in a distributive manner the treatment of the call in the geographical network.

Private networks implemented through the support of the public network B-ISDN (Broadband Integrated Service Digital Network) in ATM technique are commonly referred to as AVPN (ATM Virtual Private Network).

The use of AVPN networks involves advantages for the user in terms of cost saving, connection capacity and flexibility.

With the support of a switched public network it is in fact possible to manage the connection between remote places without being forced to use a leased network.

This allows also to optimize the exploitation of resources considering also the actual traffic interests among the different places interconnected.

Due to their intrinsic characteristics of effectiveness and flexibility, networks in ATM technique appear to be very suitable to act as support to broadband virtual private networks.

In fact the resources offered by networks in ATM technique can even not be firmly associated to a single call for the whole duration of the same, but can be assigned to the call in the quantity and for the time strictly required to transmit user's information.

Availing of this property of the ATM technique it is also possible to control enabling and disabling of connections of users abutted to an AVPN in order to create further opportunities of a better resource exploitation.

The dimensioning of the resources used by an AVPN is made controlling the allocation in real time of resources, on the basis of the knowledge of traffic interests of users abutted to the AVPN itself.

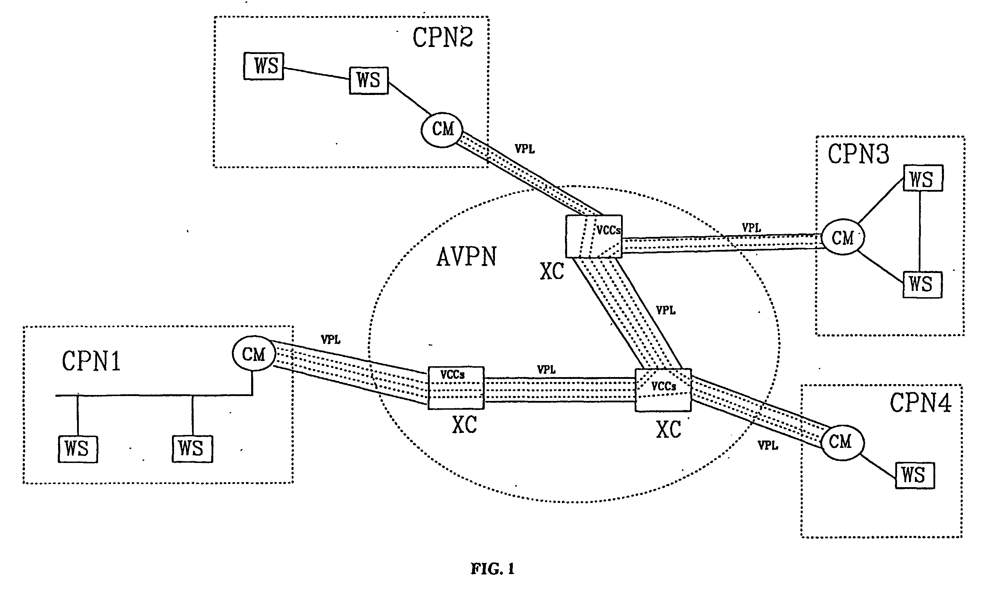

Fig. 1, shows the basic diagram of a virtual private network AVPN (ATM Virtual Private Network) connecting a plurality of local networks CPN1, CPN2,...CPNn (Customer Premises Network) located in places even very far among them, from the geographical point of view.

Each single local network is abutted, through a relevant interface device CM (CPN Manager), to access nodes of an ATM public network. Each local network CPN includes one or more user terminals WS.

The AVPN network is configured as a completely meshed network of VCCs (Virtual Channel Connections) consisting in their turn of virtual links VCLs (Virtual Channel Links).

On each link among the different pairs of nodes of the ATM network, VCLs are grouped in virtual connections VPL (Virtual Path Link).

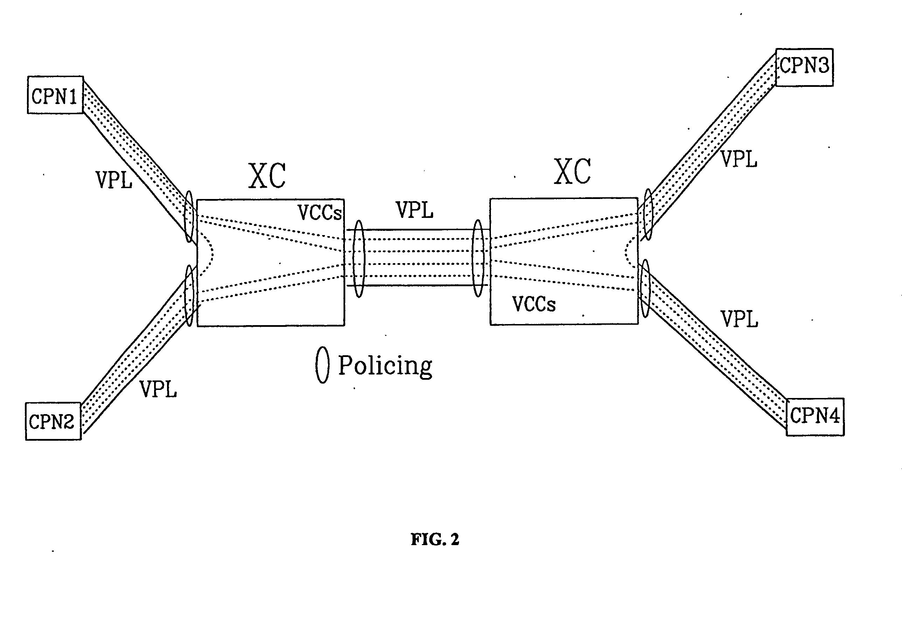

Fig. 2 shows more in detail the grouping of the different links of VCCs inside VPLs.

Cross connect points of the ATM network, marked XC in Fig. 2, are fit, among other things, with capability of virtual channels (VC) switching.

A transmission bandwidth is associated to each VPL, which is reserved by the operating company of the ATM public network, to the AVPN network.

The value of this transmission bandwidth is agreed between the user and the public network operator at the AVPN set-up time, on the basis of a trade off between the user's traffic needs, and of the service cost.

Each VPL consists of a pool of VCC. Each one of them has to observe at input the bandwidth parameter negotiated between the user and the network on AVPN set-up. The bandwidth of each VCC is dynamically negotiated.

The total value of the bandwidth actually employed by the user is obtained as a simple summation of the bandwidths of each one of the VCCs abutted in each VPL coming out from a node.

In each one of the nodes involved in the AVPN topology it is however possible to newly check in real time the bandwidth actually employed by the user, due to the "scattering" of VCCs and reassembling of VPL in new VPL.

For this reason the ATM public network is supplied with resource allocation control functions.

These control functions present in the ATM networks for the control of any connection, even not belonging to an AVPN, are indicated in Fig. 2 with an ellipse symbol indicating policing functions and are performed in such a way that, instant by instant, the total bandwidth of VCC connections sharing each VPL results topped by the total transmission bandwidth allocated to that VPL.

For sake of simplicity, this bandwidth limit shall be considered hereafter static, but this does not exclude that this bandwidth can be changed against variation of the need for transmission bandwidth by the user of the AVPN network, as for a reconfiguration of the AVPN itself.

The allocation of transmission bandwidth of each VCC inside the chain of VPL realising the end-to-end connection is, on the contrary, always of the dynamic type.

It is even possible that, at a given point in time, one single VCC occupies all the transmission bandwidth allocated to one of the VPLs concurring to interconnect two CPNs.

This results to be advantageous since, in this way, the requests for bandwidth result not bound to the number of connections configured in the AVPN network.

The dynamic allocation bandwidth at virtual channel level carries considerable traffic control problems.

Actually it is absolutely necessary to avoid that the user of each virtual channel can exceed the total bandwidth allocated to him.

It is also necessary to avoid that the total bandwidth of VCCs configured in a VPL exceeds the bandwidth allocated as a whole for the VPL itself.

In this case connections of other users of the public network could be compromised or even, the whole ATM access node could be blocked.

In fact the single user cannot know, instant by instant, the load conditions of VPLs through which his VCC is routed.

### Background Art

To solve the problem of traffic control and allocation of resources inside an AVPN network, some proposals have been made aiming at preventing arising of congestion problems of the network internal resources.

According to a proposal known from the article of S. M. Walters and M. Ahmed, titled "Broadband Virtual Private Networks and Their Evolution", Proceedings of the International Switching Symposium, Yokohama, October 25-30, 1992, VOL. 2, pages 86-90, XP000337701, policing functions to dynamically enable the use of the transmission bandwidth are implemented in each element of the ATM network involved in the AVPN. Policing functions are performed at inputs and outputs of each cross connect XC.

These policing functions are implemented, always according to this proposal, checking that the total bandwidth of all the active virtual channels on a VPL does not exceed the limit of transmission bandwidth of the VPL itself.

Due to the bandwidth dynamic allocation to the VCCs, the policing functions are performed, always according to this proposal, both on VPL at input, and on VPL at output, just because several VCC at input in an XC node could be all switched toward the same VPL at output.

This scheme shows some practical implementation problems.

A first problem is represented by the fact that, in this way, local CPNs must always dialogue between them and must always know the load condition of each single path of the network.

Check algorithms have also a calculation complexity increasing very quickly as the connection degree increases (proportionally to the square of the number of CPN networks connected by the AVPN network).

A second and more serious problem is that with such a solution it is not possible to implement in a simple way, traffic control functions capable to protect a node against congestion, occurring for instance for the concentration of several VCCs towards a unique VPL.

### Object of the Invention

It is one object of the present invention to supply a method for the real time control of resources in a virtual private network in ATM technique, not requiring for its implementation the presence of complex devices at the CPN connected to the virtual private network.

Particular object of the present invention is to supply a method not requiring to the ATM node to implement heavy functions for the detection and transmission of information relevant to the occupation condition of each virtual path VPL of such virtual private network.

### Disclosure of the Invention

These and other objects are achieved through the invention consisting in a method for the control in real time of resources in a virtual private ATM network, as disclosed in the claim 1.

### Brief Description of the Drawings

The features of the present invention which are believed to be novel are set forth with particularity in the appended claims. The invention, together with further objects and advantages thereof, may be understood with reference to the following description, taken in conjunction with the accompanying drawings and in which:
Fig. 1, already described, shows a virtual private network of the ATM type;
Fig. 2, already described, shows more in detail virtual channels and virtual paths of the network in Fig. 1 ;
Fig. 3 shows the structure of a cell of the FRM type;
Fig. 4 shows a connection diagram among the different nodes of the private network of Fig. 2;
Fig. 5 shows the structure of an ATM node according to the present invention;
Fig. 6 shows the structure of a server for FRM cells according to the present invention;
Fig. 7 shows the structure of a memory unit MAIN_MEMORY of the server of Fig. 6;
Fig. 8 shows the structure of a memory unit TIMING_MEMORY of server in Fig. 6;
Fig. 9 shows the structure of a memory unit OUTPUT_MEMORY of the server of Fig. 6;
Figures 10 to 22 show flow diagrams indicating the different phases of the operation of server in Fig. 6; 5

### Detailed Description of a Preferred Embodiment

As said above, according to the invention, all the functions for request transmission and signals relevant to transmission bandwidth allocations are performed at ATM level using particular types of ATM cells called FRM cells (Fast Resource Management)

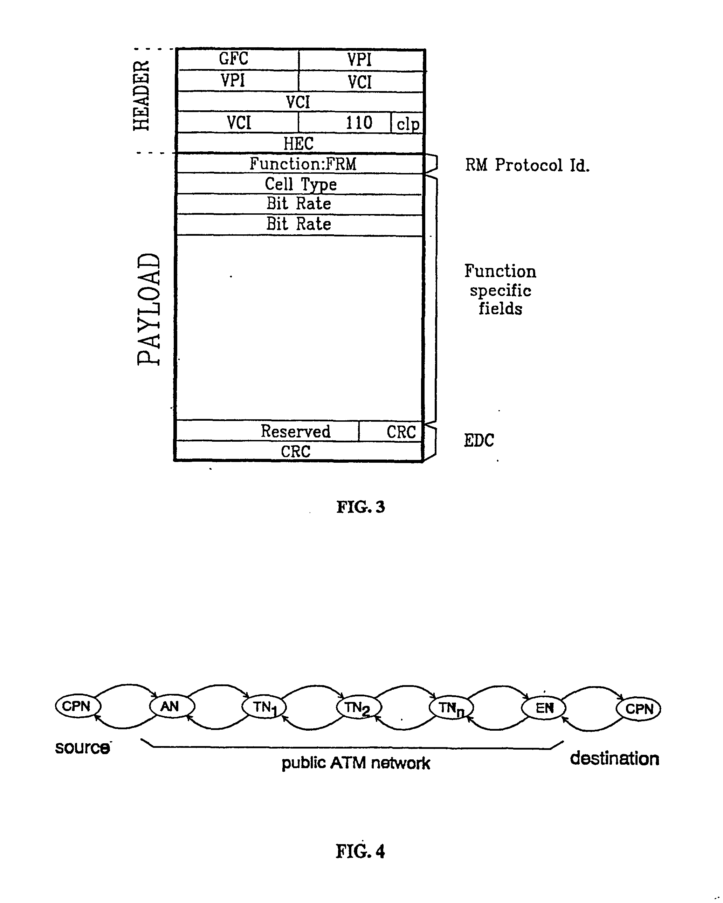

The structure of an ATM cell of the FRM type, particular case of the more general structure of Resource Management (RM) cell, is shown in Fig. 3.

The header HEADER of an ATM cell contains a virtual path identifier (Virtual Path Identifier), a virtual channel identifier VCI (Virtual Channel identifier), a payload type identifier PTI (Payload Type Identifier), a priority level identifier CLP (Cell Loss Priority) and a header error control field HEC (Header Error Control).

RM cells can be distinguished from other ATM cells for the presence of value 110 included in the header PTI field. Also, the indication relevant to the specific FRM protocol is contained in the first byte PI (Protocol Identifier) of the payload.

The FRM protocol, having higher level compared to the ATM protocol, is transported in the subsequent field of the cell payload. In particular the payload of the FRM cell contains a field indicating the type of FRM cell. Subsequent field of the payload contain information relevant to the protocol. In the application according to the present invention, some field of the payload of FRM cells are used to contain the values of bandwidth parameters of the VCC one wants to modify.

Possible FRM cell types are the following:
- Reservation Request Cell (bandwidth request);
- Release Request Cell (bandwidth release);
- Reservation Received Cell;
- Reservation Denied Cell;
- Updating Cell;
- Test Cell;
- Reset Cell;
- Bandwidth Allocated Cell;
- Error Cell.

The functional diagram of Fig. 4 shows the elements of the AVPN involved in information exchanges relevant to bandwidth request phases preceding the transmission of data and the bandwidth release at the end of data transmission.

The access node of the AVPN network to which the user network CPN willing to transmit its data is connected, has been indicated with AN (Access Node).

The access node is connected to the Egress Node through a plurality of transit nodes TN1, TN2, TNn (Transit Node).

Before starting the transmission of data, the user local network CPN sends toward the access node AN a Reservation Request type cell. Another field of this FRM cell, still transported in the payload, contains inside a parameter BAND_REQ indicating the value of the requested transmission bandwidth.

Once a Reservation Request cell is received, the access node AN transmits toward the user network CPN a Reservation Received cell indicating the occurred reception of the previous Reservation Request type cell.

Afterwards, the access node AN attempts to reserve the bandwidth value indicated by the parameter BAN_REQ, for the VCC indicated by the request by the user network CPN.

Should this reservation attempt not be successful, or whenever a bandwidth quantity higher than or equal to BAND_REQ is not available on the egress VPL containing that particular VCC, the access node AN transmits toward the user network CPM a Reservation Denied type cell.

Alternatively the access node AN, before transmitting the Reservation Denied type cell can proceed to a preset number of reservation re-attempts, spaced according to a time-out T1.

On the contrary, should the reservation attempt be successful, the access node AN sends a Reservation Request type cell whose payload contains, once again, the BAN_REQ parameter indicating the value of the required transmission bandwidth toward the first transit node TN1.

At the same time, the access node AN updates the bandwidth value temporarily available on the CPL at output, subtracting the BAND_REQ value.

Once this Reservation Request cell is received, the transit node TN1 attempts to reserve the bandwidth value indicated by the parameter BAND_REQ on the subsequent VPL.

Should this reservation attempt not be successful the transit node TN1 transmits toward the access node AN a Reservation Denied type cell.

The access node AN provides then to send this cell toward the user network CPN which is thus immediately informed of the non availability of the bandwidth required on one of the VPLs concerned in the connection.

Alternatively the access node AN can reiterate this reservation attempt in automatic mode at the end of a given time-out T1.

On the contrary, should this reservation attempt be successful the transit node TN1 updates the occupation table at the address corresponding to the virtual channel VCC and updates the bandwidth value temporarily available on the VPL at output, subtracting the BAND_REQ value.

Then, the transit node TN1 sends towards the next transit node TN2 a Reservation Request Cell which payload contains, once again, the parameter BAND_REQ indicating the value of the required transmission bandwidth.

This cycle of reservation attempts goes on, crossing all the transit nodes TN up to reaching the last node (EN) on the AVPN path.

Once the Reservation Request cell is received, the last node EN, tries to reserve the bandwidth value indicated by the BAND_REQ. parameter on the virtual path VP connecting the same to the destination user.

Should this reservation attempt not be successful, the last EN node transmits backward the Reservation Denied cell towards all previous transit nodes.

In the case also this last reservation attempt is successful, the egress node EN sends backward a Reservation Accepted type cell to the access node AN, crossing all transit nodes TN.

Alternatively, the last node EN sends the Reservation Accepted type cell backward, only after having received a similar cell of Reservation Accepted type by the destination user network CPN. In this case the final acceptance is transferred to the final user network CPN which could even reject the acceptance for its own reasons even if the bandwidth is actually available up to the final link.

According to the invention, transit nodes TN and the access node AN crossed by said cell of Reservation Accepted type confirm the bandwidth reservations previously made.

Furthermore, the access node AN informs the parts performing the policing functions of the occurrence of this transmission bandwidth allocation.

Profitably, this information operation toward the parts performing policing functions is made through sending of FRM cells of the Updating type.

Once this Reservation Accepted cell is received by the user network CPN, the actual transmission of data can start.

In fact, once this Reservation Accepted type cell is received, the user network CPN is assured that on all VPLs concerned in the connection with the egress node EN a bandwidth is allocated sufficiently to support its data transmissions.

Upon completion of the data transmission phase, the user network CPN transmits a Release Request cell toward the access node AN.

The access node AN, after receipt of the Release Request cell, updates its occupation table at the address corresponding to the subject virtual channel VCC and informs policing function elements of the occurred bandwidth release.

Then, the access node AN re-transmits the Release Request type cell through all transit nodes TN up to the egress node EN. All these nodes proceed to updating of their occupation tables and possibly to inform the elements performing the policing functions of said bandwidth release completed.

Finally the egress node EN sends backward to the access node AN a FRM cell of the Release Completed type, confirming the completed bandwidth release on all VPLs concerned in the connection.

One could appreciate that, in this way, it is not necessary to make policing in the different transit nodes TN and in the final node EN, but only in the first access node AN.

We can also appreciate that, in this way, the user network CPN resolving to transmit data can receive a confirmation message (Reservation Accepted Cell) at its transmission request (Reservation Request Cell) in a time equal to time required to a cell to reach the egress node EN (or the destination CPN in a different option previously described) and come back.

One can also highly appreciate that, whenever anyone of VPLs concerned in the connection should not avail of sufficient bandwidth to assure data transmission, the user network CPN should be promptly informed of this, thanks to the message represented by the Reservation Denied Cell, without the need of waiting that the request, represented by the Reservation Request Cell, reaches the EN node, or the destination CPN, and comes back.

Usefully, the access node AN incorporates timer functions allowing to control critical situations, even if rather unlikely, such as the possible loss of FRM cells.

On the moment of sending a request message (Reservation Request Cell) or bandwidth release (Release Request Cell), the access node AN sets a time-out T2, having value equal to the network crossing time max. (Round Trip Delay).

If no cell is lost, the access node AN, certainly receives the corresponding confirmation message (Reservation Accepted Cell, Reservation Denied Cell or Release Completed Cell) before the end of the time-out T2.

On the contrary, in case of cell loss, the access node can receive no answer before the end of the time-out T2.

Then, once the time-out T2 is over, the access node AN proceeds to retransmission of the request cell (Reservation Request Cell) or of the bandwidth release cell (Release Request Cell) for a preset number of times.

The advantages of the invention are evident.

Due the speed of the ATM technique and the protocol simplicity, it is possible to perform the operations foreseen by the protocol in times compatible with the Quality of Service QoS required at call level.

The sole difference the user can notice, compared to a connection made through a rented network, is the possibility to receive a refusal (block) on the moment of the call. Once the call is accepted the connection is immediately set-up without long connection set-up delays.

An additional considerable advantage of the present invention is that, in this way, all the functions previously described for sending and receiving FRM cells can be implemented through dedicated servers, placed close to the nodes involved in the AVPN (AN, TN and EN).

In this way, also the policing functions result not being necessary in the TN and EN nodes, being enough the control made in the node AN.

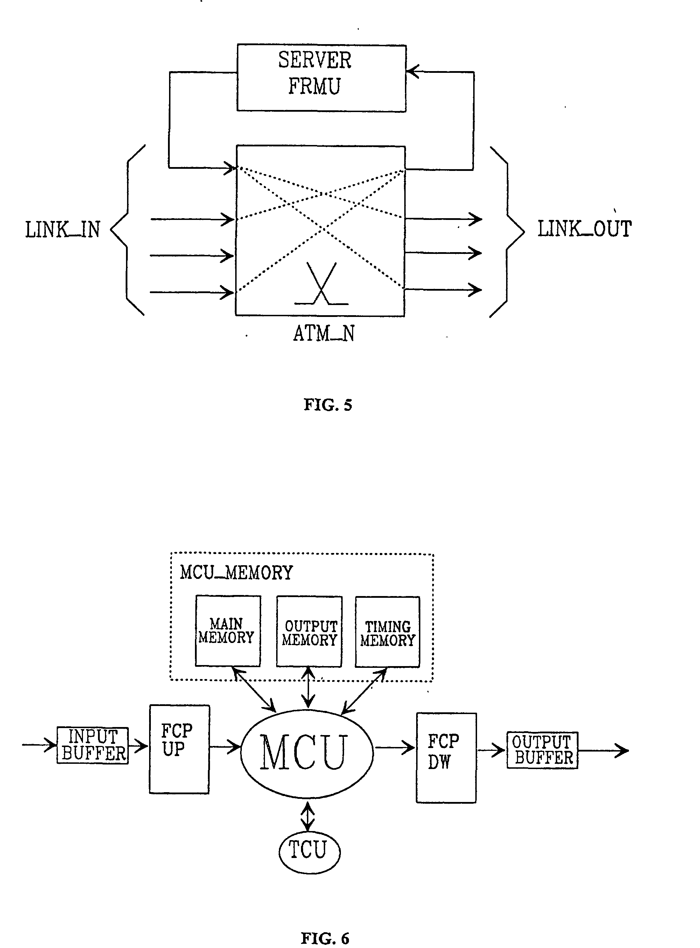

Fig. 5 shows a connection diagram of a server, identified as a whole with SERVER FRMU (Fast Resource Management Unit), with a switching node ATM, generically indicated ATM_N.

The ATM_N node of Fig. 5 can represent without distinction, among the nodes shown in Figures 1 and 2, the access node AN, transit nodes TN or the egress node EN.

Making reference to the attached Fig. 5 we can notice that the input of the FRMU server is connected to one of the output links LINK_OUT of the ATM_N node.

The output of the FRMU server is on the contrary connected to one of the input links LINK_IN of the ATM_N node.

The FRMU server is seen by the ATM_N node as an user putting ATM cells on the input link LINK_IN and receiving ATM cells on the output link LINK_OUT.

According to the invention the node ATM_N examines the content of the PTI field of all the ATM cells it receives at its inputs and checks the presence, inside this field, of the value 110 identifying the ATM cell as RM type cell.

The ATM_N node addresses all the cells acknowledged as RM cells toward its output link LINK_OUT, to which the server FRMU is connected.

In the particular embodiment of Fig. 5 one output link LINK_OUT only is foreseen, which does not exclude the possibility that an higher number of links exist between the ATM node and the FRMU server.

The server FRMU analyses the RMPI field (RM Protocol Identifier) of the RM cell payload in order to separate RM cells employing the protocol herein described and those not employing it.

Cells of the RM type with protocol different from that here described, transparently cross the server FRMU and are immediately sent again to the ATM_N node.

Referring to the attached Fig. 6 a functional block diagram shall be described, highlighting the different parts forming a server FRMU.

The server FRMU includes an input buffer INPUT_BUFFER with input connected to the output LINK_OUT of the ATM_N node.

The output of the input buffer INPUT_BUFFER is connected to a first processor of FRM cells, identified FCP_UP (FRM Cell Upstream Processor), connected in its turn to a control unit MCU (Main Control Unit).

The control unit MCU is connected to a memory unit MCU_MEMORY and to a timer control unit TCU (Timer Control Unit).

The control unit MCU is also connected to a second cell processor FRM, labelled FCP_DW (FRM Cell Downstream Processor).

The output of the cell processor FCP_DW is connected to the input of an output buffer OUTPUT_BUFFER whose output is connected to the input LINK_IN of the node ATM_N.

The memory unit MCU_MEMORY includes a main memory unit MAIN_MEMORY, an output memory unit OUTPUT_MEMORY, and a timing memory unit TIMING_MEMORY.

The memory MAIN_MEMORY contains information relevant to the status of all the AVPN calls involving the server FRMU.

The memory OUTPUT_MEMORY contains information relevant to the quantity of bandwidth available of the different output links.

The memory TIMING_MEMORY contains the identifiers of all the calls for which a timer has been set.

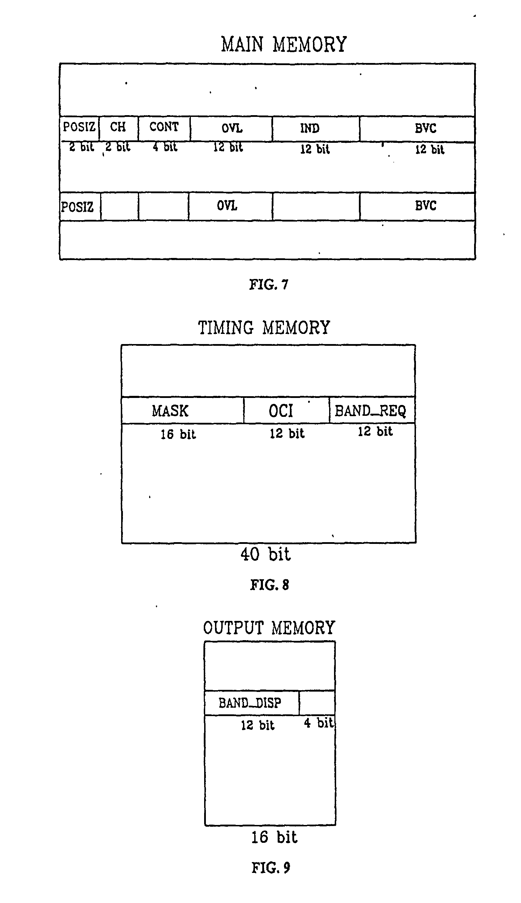

Fig. 7 shows an embodiment of the memory MAIN_MEMORY consisting of the following fields:
POSIZ: contains the information on the node position with respect to the specific call (AN, TN, EN);
CH: contains an indication of the call status such as "under release" (00), "stand by" (01), "reserved" (10) and "stable" (11).
CONT: contains the number of attempts made by the access node for a given operation (fields CH and CONT are used only in the case of access node AN);
OVL (output VP Link): contains the memory access address OUTPUT_MEMORY;
IND: contains the access address to the TIMING_MEMORY in the case of timer abatement (also this IND field is used only in the access node AN);
BVC: contains the information on the bandwidth currently associated to the call.

Fig. 8 shows an embodiment of the memory TIMING_MEMORY which results consisting of 4096 words of 40 bits, one for each timer.

The 40 bits of each word of the memory TIMING_MEMORY of Fig. 8 are divided into three parts, a first part MASK of 16 bits, a second part OCI (identifier of the virtual channel at output concerned by the operation requested through this FRM cell) of 12 bits, and a third part BAND_REQ of 12 bits.

Fig. 9 shows an embodiment of the memory OUTPUT_MEMORY consisting of 16 bit words.

The 16 bits of each word of the memory OUTPUT_MEMORY of Fig. 9 are divided into two parts, a first part BAND_DISP of 12 bits, and a second part of 4 bits destined to future applications.

The FRMU device operates as follows.

FRM cells reaching the connection LINK_OUT from the ATM_N node are stored in the buffer INPUT_BUFFER and are processed by the processor FCP_UP. The processor FCP_UP picks from the cell FRM the information contained in the same and particularly those relevant to the call identifier (OCI), to the cell type (Cell Type) and to the bandwidth requested (BAND_REQ).

The main control unit MCU executes the FRM protocol having access to the information stored in the three memory units MAIN_MEMORY, OUTPUT_MEMORY and TIMING_MEMORY.

On the basis of information stored in said memory units, the MCU unit commands the processor FCP_DW to send FRM cells toward the buffer OUTPUT_BUFFER.

FRM cells stored in the buffer OUTPUT_BUFFER are finally sent to the connection LINK_IN of the ATM_N node.

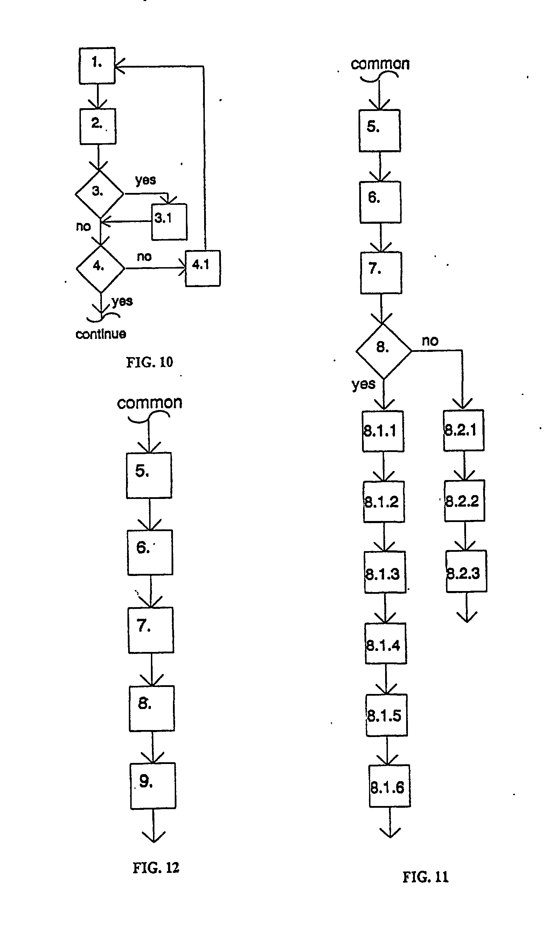

Referring to flow diagrams in Figures 10-22, the operation of the FRMU server during the performance of the different phases of the method according to the present invention, shall now be described.

Making reference to Fig. 10 the operation of a phase, identified COMMON, preliminarily performed by the MCU unit at the arrival of each FRM cell, shall now be described.

This phase COMMON is common to all the different phases which shall be described later, and shall therefore be indicated only once.

During the COMMON phase, the MCU unit, initially sets at a phase 1, where the arrival of a cell is recognized and in which the values of OCI, Cell Type and BAND_REQ values are read.

Then the MCU unit sets at a phase 2. for the reading of the POSIZ value of the memory MAIN_MEMORY.

The MCU unit sets then at a test phase 3., in which it is checked if the node in AN position.

Should test 3. be successful, the MCU unit sets at a phase 3.1. where the CH value is acquired. This CH value has a meaning only for AN nodes.

Afterwards, the MCU unit sets at a test phase 4., where compatibility between the type of message received and the position (possibly associated to the status) in which the node is, is checked.

On the contrary, should the test 3. be not successful, the MCU unit, directly goes to the test 4. phase, skipping phase 3.1.

In the case test 4. has a negative result, the MCU unit sets at a phase 4.1. in which an appropriate error signal is generated and the MCU units returns to phase 1. waiting for a next cell.

While if test 4. is successful, the MCU unit quits the COMMON phase and goes on with differentiate processing phases according to the type of cell, to the role of the switching node ATM to which the server FRMU is connected plays for that connection and, in the case of node AN, to the status indicated by the field CH.

In the flow diagram in fig. 11, the procedure accomplished by the server FRMU shall now be described in the case the switching node ATM to which the server itself is connected, is the access node AN and in which the cell identified in the COMMON phase is a Reservation Request type cell.

Referring to Fig. 11 after the COMMON phase, the MCU unit sets at a phase 5. where the OVL value of the memory MAIN_MEMORY is read.

Then the MCU unit sets at phase 6. in which a Reservation Received type cell is sent toward the user network CPN.

Next, the MCU unit sets at phase 7. in which the value of the BAND_DISP field is read by the memory OUTPUT_MEMORY.

The MCU unit sets at test phase 8. where it is checked if the BAND_DISP value is higher than the BAND_REQ value.

In the case the test 8. is successful the MCU unit sets at a phase 8.1.1 where an indication of "call reserved" is written inside the field CH of the memory MAIN_MEMORY.

Then the MCU unit sets at a phase 8.1.2 where a value equal to the difference between the BAND_DISP value and the BAND_REQ value is written inside the memory OUTPUT_MEMORY.

Then the MCU unit sets at a phase 8.1.3 where a value MASK2 = T2 + DELTA, is calculated, where DELTA represents the present time instant. The MASK2 value represents therefore the time instant when the timer T2 shall be over (answer stand by).

The MCU unit sets at a phase 8.1.4 in which values MASK2, BAND_REQ and OCI values calculated before are written in the memory TIMING_MEMORY.

Then the MCU unit sets at a phase 8.1.5 in which a value indicating the access address to the memory location TIMING_MEMORY containing the information MASK2, is written inside the IND field of the memory MAIN_MEMORY. Whenever the bandwidth allocation request has positive result by the subsequent nodes, this IND field shall allow to find the location of timer to cancel in the memory TIMING_MEMORY.

Finally the MCU unit sets at phase 8.1.6 in which a Reservation Request type cell is sent toward the subsequent node.

On the contrary, should test 8 give negative result, the MCU unit sets at phase 8.2.1 in which a "waiting call" indication is written inside the CH field of the memory MAIN_MEMORY and the value of the CONT field containing the number of new attempts is increased by one unit.

Then the MCU unit sets at phase 8.2.2 in which a value MASK1 = T1 + DELTA, where DELTA represents the present time instant, is calculated. The MASK1 value represents therefore the time instant in which the timer T1 shall be over (interval among new attempts).

The MCU sets at phase 8.2.3 in which values MASK1, BAND_REQ and OCI values previously calculated are written inside the memory TIMING_MEMORY.

In the flow diagram of fig. 12 the procedure performed by the server FRMU in the case the switching node ATM to which the server itself is connected is the access node AN and in which the cell identified in the COMMON phase is a cell of the Reservation Accepted type, shall now be described.

Making reference to Fig. 12, after the COMMON phase, the MCU unit sets at phase 5. where the IND value is read from the memory MAIN_MEMORY.

Then the MCU unit sets at phase 6. in which the timer T2 is reset.

Then the MCU unit sets at phase 7. in which an indication of "stable call" is written inside the field CH of the memory MAIN_MEMORY and the BCV value of the bandwidth associated to this call is updated.

Then the MCU unit sets at phase 8 during which a reservation accepted cell is sent toward the user network CPN.

Then the MCU unit sets at phase 9 in which an Updating cell is sent toward the devices performing the policing functions.

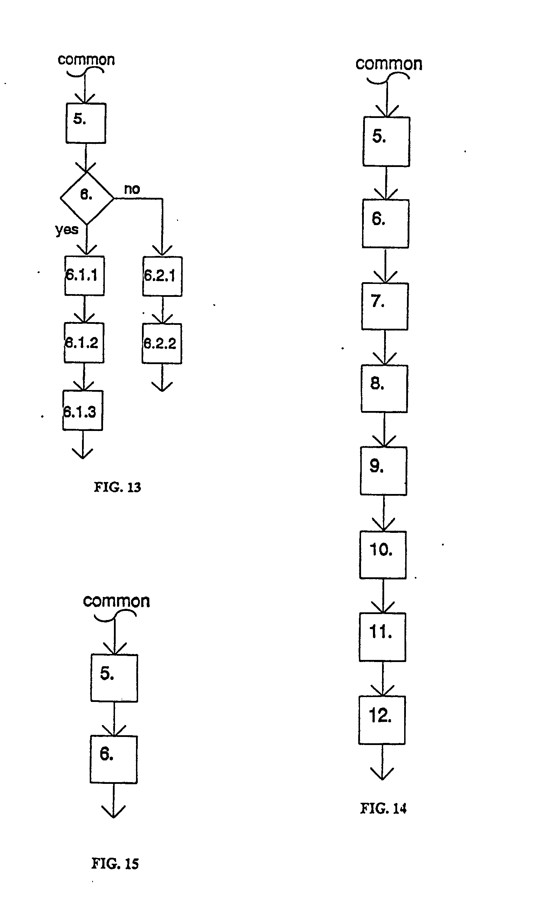

In the flow diagram of Fig. 13 the procedure performed by the server FRMU in the case in which the switching node ATM to which the server is connected is the access node AN and in which the cell identified in the COMMON phase is a Reservation Denied Cell, shall now be described.

Referring to Fig. 13, after the COMMON phase, the MCU unit sets at phase 5. in which the values contained in fields CONT and OVL of the memory MAIN_MEMORY are read.

Then the MCU unit sets at the test phase 6. in which it is checked if the CONT value is lower than a maximum value MAX and where the timer T2 is reset.

Should the test 6 give successful results the MCU unit sets at phase 6.1.1. where an indication of "waiting call" is written inside the field CH of the memory MAIN_MEMORY and the value of the field CONT containing the number of new attempts is increased by one unit.

Then the MCU unit sets at phase 6.1.2 in which a value MASK1 = TIME1 + DELTA, where DELTA represents the present time instant, is calculated. The MASK1 value represents therefore the time instant on which the timer T1 shall be over (interval among new attempts).

The MCU sets at phase 6.1.3 in which values MASK1, BAND_REQ and OCI values, previously calculated are written inside the memory TIMING_MEMORY.

On the contrary, in the case the test 6. gives negative results, the MCU unit sets at phase 6.2.1. in which an indication of "stable call" is written inside the field CH of the memory MAIN_MEMORY and the value of the CONT field containing the number of new attempts is reset.

Finally, the MCU unit sets at phase 6.2.2 in which a Reservation Denied Cell is sent toward the user network CPN.

In the flow diagram of Fig. 14 the procedure performed by the server FRMU in the case the switching node ATM to which the server is connected, is the access node AN and in which the cell identified in the COMMON phase is a Release Request Cell, shall now be described.

Referring to Fig. 14, after the COMMON phase, the MCU unit sets at phase 5. in which the value contained in field OVL of the memory MAIN_MEMORY is read.

Then the MCU unit sets at phase 6, where an indication of "call release" indication is written inside the CH field of the memory MAIN_MEMORY and the BVC value of the bandwidth associated to this call is updated.

Then the MCU unit sets at phase 7. in which the updated value of the available bandwidth on the output link is written inside the memory OUTPUT_MEMORY.

Then the output memory sets at phase 8, where a Release Request cell is sent toward the subsequent node.

Then the MCU unit sets at phase 9. where an Updating cell is sent toward the policing devices.

Afterwards the MCU unit sets at phase 10. where a value MASK2 = TIME2 + DELTA, where DELTA represents the present time instant, is calculated. The MASK2 value represents therefore the time instant on which the timer T2 shall be over (answer stand by).

The MCU sets at phase 11 in which values MASK2, BAND_REQ and OCl values, previously calculated are written inside the memory TIMING_MEMORY.

Finally, the MCU unit sets at phase 12 in which a value indicating the access at TIMING_MEMORY location containing said MASK2 information is written inside the field IND.

In the flow diagram of Fig. 15 the procedure performed by the server FRMU in the case the switching node ATM to which the server is connected is the access node AN and in which the cell identified in the COMMON phase is a Release Completed Cell, shall now be described.

Referring to Fig. 15, after the COMMON phase, the MCU unit sets at phase 5. in which the value contained in field IND of the memory MAIN_MEMORY is read.

Finally the MCU unit sets at phase 6. where the timer T2 is reset.

Sequences of operations to be made at timer T1 or T2 time out in the node AN are not described since these operations are similar to those already described. In fact, at timer time out, it is necessary to try again the operations not performed when the timer has been set (in case of timer T1) or which did not receive confirmation messages (positive or negative) from nodes TN downstream in due time (in case of timer T2): if a timer T2 is over, it means that some request or answer cell was lost in the network and the operation not completed has to be remade.

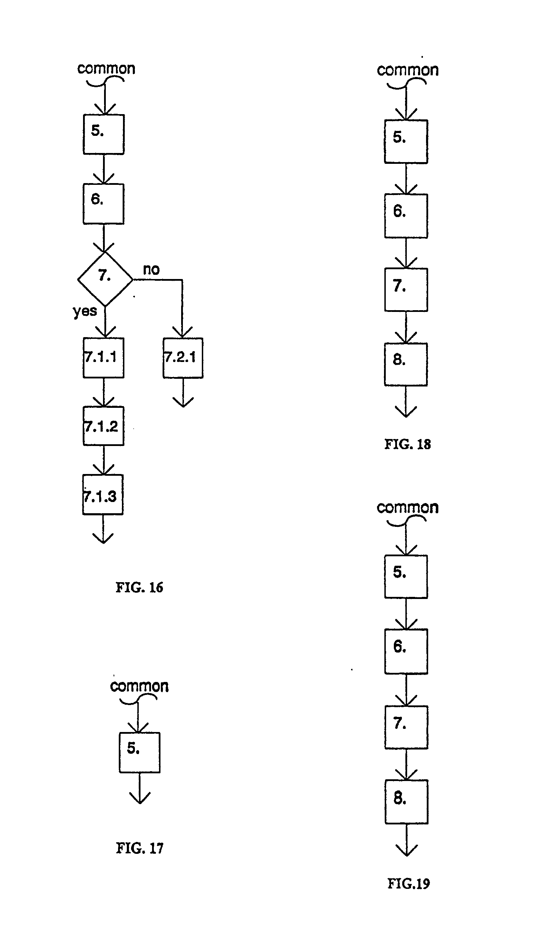

In the flow diagram of Fig. 16 the procedure accomplished by the server FRMU in the case the switching node ATM to which the server itself is connected is a transit node TN and in which the cell identified in the COMMON phase is a Reservation Requested Cell, shall now be described.

Referring to Fig. 16, after the COMMON phase, the MCU unit sets at phase 5. in which the OVL value is read in the MAIN_MEMORY.

Then the MCU unit sets at phase 6, where the BAND_DISP field value is read in the OUTPUT_MEMORY.

Then the MCU unit sets at test phase 7. where it is checked if the BAND_DISP value is higher than the BAND_REQ value.

In the case test 7. is successful, the MCU unit sets at phase 7.1.1. in which the updating of the value of the bandwidth associated to the call is written inside the BVC field of the MAIN_MEMORY.

Then the MCU unit sets at phase 7.1.2, where a value equal to the difference between BAND_DISP and the value BAND_REQ is written inside the OUTPUT_MEMORY.

Finally the MCU unit sets at phase 7.1.3. where a Reservation Request cell is sent toward the subsequent node.

On the contrary, if test 7. is not successful, the MCU unit sets at a phase 7.2.1. in which a Reservation Denied cell is sent toward the previous node.

In the flow diagram of Fig. 17 the procedure accomplished by the server FRMU in the case the switching node ATM to which the server itself is connected is a transit node TN and in which the cell identified in the COMMON phase is a Reservation Accepted Cell, shall now be described.

Referring to Fig. 17, after the COMMON phase, the MCU unit sets at phase 5. in which a Reservation Accepted cell is sent toward the previous node.

In the flow diagram of Fig. 18 the procedure accomplished by the server FRMU in the case the switching node ATM to which the server itself is connected is a transit node TN and in which the cell identified in the COMMON phase is a Reservation Denied Cell, shall now be described.

Referring to Fig. 18, after the COMMON phase, the MCU unit sets at phase 5. in which the value contained in the field OVL of the memory MAIN_MEMORY is read.

Then the MCU unit sets at phase 6. in which the indication of the bandwidth associated to the call is written inside the BVC field, restoring the value preceding this unsuccessful reservation attempt.

Then the MCU unit sets at phase 7. where the updated value of BAND_DISP is written inside the memory OUTPUT_MEMORY restoring the previous value, read in one of the information fields of the Reservation Denied cell.

Finally the MCU unit sets at phase 8 where a Reservation Denied cell is sent toward the previous node.

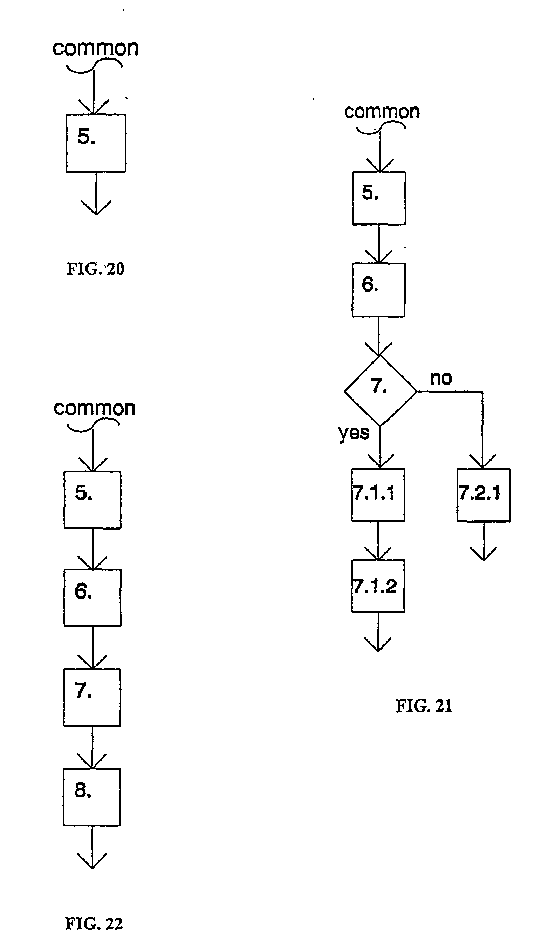

In the flow diagram of Fig. 19 the procedure accomplished by the server FRMU in the case the switching node ATM to which the server itself is connected is a transit node TN and in which the cell identified in the COMMON phase is a Release Request Cell, shall now be described.

Referring to Fig. 19, after the COMMON phase, the MCU unit sets at phase 5. in which the value contained in the field OVL of the memory MAIN_MEMORY is read.

Then the MCU unit sets at phase 6. in which the indication of the new value of the bandwidth associated to the call is written inside the BVC field of the MAIN_MEMORY.

Then the MCU unit sets at phase 7. where the updated value of available bandwidth on the output link is written inside the memory OUTPUT_MEMORY, adding the bandwidth released with this operation.

Finally the MCU unit sets at phase 8 where a Release Request cell is sent toward the subsequent node.

In the flow diagram of Fig. 20 the procedure accomplished by the server FRMU in the case the switching node ATM to which the server itself is connected is a transit node TN and in which the cell identified in the COMMON phase is a Release Completed Cell, shall now be described.

Referring to Fig. 20, after the COMMON phase, the MCU unit sets at phase 5. in which a Release Completed cell is sent toward the previous node.

Whenever the FRM protocol is terminated by the destination user network CPN and not by the EN node, the EN node operates just as one of the TN nodes.

In this case, operations performed after phase 5. are similar to the operations previously described referring to nodes TN and therefore the same shall no more be described.

A description shall be given hereafter of the operations performed on the EN node whenever the EN node itself terminates the protocol FRM, instead of assigning the performance of these operations to the destination CPN connected to the same.

In the flow diagram of Fig. 21 the procedure accomplished by the server FRMU in the case the switching node ATM to which the server itself is connected is an egress node EN and in which the cell identified in the COMMON phase is a Reservation Request Cell, shall now be described.

Referring to Fig. 21, after the COMMON phase, the MCU unit sets at phase 5. in which the OVL value of the memory MAIN_MEMORY is read.

Then the MCU unit sets at phase 6. in which the indication of the value of the field BAND_DISP is read by the OUTPUT_MEMORY.

Then the MCU unit sets at phase 7. where the BAND_DISP value is checked to be higher than the BAND_REQ one.

Should the test 7. be successful, the MCU unit sets at phase 7.1.1 in which a value equal to the difference between the BAND_DISP value and the BAND_REQ value is written inside the OUTPUT_MEMORY.

Then the MCU unit sets at phase 7.1.2. in which the content of the BVC field of the memory MAIN_MEMORY is updated and sent toward the previous node a Reservation Accepted cell.

On the contrary, should the test 7. give negative result the MCU unit sets at phase 7.2.1. in which a Reservation Denied cell is sent toward the previous node.

In the flow diagram of Fig. 22 the procedure accomplished by the server FRMU in the case the switching node ATM to which the server itself is connected is an egress node EN and in which the cell identified in the COMMON phase is a Release Requested Cell, shall now be described.

Referring to Fig. 22, after the COMMON phase, the MCU unit sets at phase 5. in which the OVL value of the memory MAIN_MEMORY is read.

Then the MCU unit sets at phase 6. in which the updated value of BAND_DISP relevant to that connection is written in the OUTPUT_MEMORY.

Then the MCU unit sets at phase 7. where the BVC field of the MAIN_MEMORY is updated subtracting the value of bandwidth released.

Then the MCU unit sets at phase 8. in which a Release Completed cell is sent towards the previous node.

The advantages of the invention are evident.

With a method according to the present invention, policing functions must be performed only in the access node AN and not in transit nodes TN and in the final node EN.

Furthermore, the performance of all the phases forming the method according to the present invention are carried out at FRM protocol level. Being the FRM protocol an ATM level protocol, all the operations are carried out with high effectiveness and speed.

Since the traffic control of all the FRM type cells crossing each node is assigned to a relevant server FRMU, this allows to obtain the support of AVPNs in a public network ATM adding a very limited number of equipment (one FRMU server for each node).

Being the number of FRM cells considerably reduced compared to the total number of ATM cells crossing the node, FRMU servers treat a very reduced cell flow.

Thanks to this fact, FRMU servers can be realised with simple and low cost devices.

For instance, a typical server FRMU for an access node of average dimension could be realised using an ordinary Personal Computer.

## Claims

1. Method for the control in real time of resources in a virtual private ATM network (AVPN) connecting a plurality of user local networks (CPN1, CPN2,...CPNn) located in places even very far among them from the geographical point of view and each one abutted to an access node (AN) of an ATM public network whose information relevant to the different services is organized as information units having fixed length called ATM cells, and said virtual private network (AVPN) being configured as a completely meshed network of virtual channel connections (VCC) consisting in their turn of virtual links (VCL), said virtual channel links (VCL) being grouped, among different pairs of nodes (AN) and egress nodes (EN) in virtual path links (VPL) through transit nodes (TN) and a transmission bandwidth agreed between the user of the virtual private network (AVPN) and the managing company of the public network ATM being reserved to said virtual path links (VPL), **characterized by the fact to** include for each user of said virtual private network (AVPN) abutted to an input access node (AN) of said public network ATM willing to transmit data with a given transmission bandwidth (BAND_REQ) toward another user of said virtual private network (AVPN) abutted to another destination access node (EN) of said public ATM network, the following steps:
- sending, by the user network (CPN1) which the user is abutted to, an ATM cell of a Fast Resource Management protocol, called hereinafter FRM and supported by said public ATM network, indicating a reservation request for transmission bandwidth toward said input access node (AN); said ATM cell of the FRM type including an information (BAND_REQ) indicating the value of the required transmission bandwidth;
- starting the transmission of data only after having received an ATM cell of the FRM type indicating a confirmation of acceptance of the above mentioned request from all the elements of the network (AN, TN, EN) concerned in the connection.

2. Method according to claim 1, **characterized by** the fact to foresee the following steps:
- making, by said input access node (AN), a reservation attempt of a transmission bandwidth value equal to said value (BAND_REQ) of transmission bandwidth requested for the connection of the virtual channel (VCC) to which said cell indicating a reservation request for transmission bandwidth, belongs;
- in case the reservation is made due to sufficient availability of the transmission bandwidth, sending, by said input access node (AN), toward a first transit node (TN1) placed between said access node (AN) and said egress node (EN), said ATM cell of the FRM type indicating a request for reservation of transmission bandwidth and update, the bandwidth value temporarily available on the virtual path connection (VPL) which said virtual channel connection (VCC) belongs to, subtracting said value of requested transmission bandwidth (BAND_REQ);
- for all the transit nodes (TN2, TN3, ..., TNn) along the virtual path (VPL) connecting said first transit node (TN1) to said egress node (EN), in case of reservation made due to sufficient transmission bandwidth availability, sending, by a transit node toward a subsequent node said ATM cell of the FRM type indicating a request for reservation of transmission bandwidth, and update the bandwidth value temporarily available on the virtual path connection (VPL) which said virtual channel connection (VCC) belongs to, subtracting said value of requested transmission bandwidth (BAND_REQ);
- sending, by said egress node (EN), backward toward all the nodes (Tn1, TNn-1, ....,TN1, AN) previously crossed by said ATM cell of the FRM type indicating a request for reservation of transmission bandwidth, an ATM cell of the FRM type indicating the confirmation of acceptance of the reservation of transmission bandwidth previously made;
- for all the nodes (EN, TNn, TNn-1..., TN1, AN) crossed by said ATM cell of the FRM type indicating a confirmation of acceptance of transmission bandwidth reservation, making this reservation of transmission bandwidth effective; and
- starting data transmissions toward the user network (CPNn) abutted to said egress access node (EN) along the virtual path connection (VPL) defined by virtual channel connections (VCC) previously set-up.

3. Method according to claims 1 and 2, **characterized by** the fact to include, for each node (AN,TN1,TN2, ..., TNn, EN) of said public network of the ATM type receiving said ATM cell of the FRM type indicating a request for transmission bandwidth reservation, the following step:
- in case of non reservation due to unavailability of transmission bandwidth, sending backward toward the node which previously sent said ATM cell of the FRM type indicating a reservation request for transmission bandwidth, an ATM cell of the FRM type indicating a refusal of acceptance of the reservation request for transmission bandwidth.

4. Method according to claim 3, **characterized by** the fact to include, for each access node (AN) of said public network of the ATM type receiving said ATM cell of the FRM type indicating a reservation request for transmission bandwidth, the following step:
- in case of non reservation due to unavailability of transmission bandwidth, reiterating, up to a pre-set number of new attempts, the attempt for reservation of transmission bandwidth at the end of a first pre-set time-out before sending backward to the user local network which the user of said ATM cell of the FRM type indicating a refusal of acceptance of the reservation request for transmission bandwidth.

5. Method according to claim 3, **characterized by** the fact that said input access node (AN), after having sent said ATM cell of the FRM type indicating a reservation request for transmission bandwidth, carries out the following steps:
- setting a second time-out;
- checking the arrival of a response message consisting of an ATM cell of the FRM type indicating a confirmation of acceptance of the reservation of transmission bandwidth previously made or of an ATM cell of the FRM type indicating a refusal of acceptance of the reservation request of transmission bandwidth;
- for a pre-set number of times, in case of non arrival of said response message at the end of said second time-out, re transmitting said ATM cell of the FRM type indicating a reservation request for transmission bandwidth.

6. Method according to claim 5, **characterized by** the fact that said second time-out has a value equal to the maximum Round Trip Delay.

7. Method according to claims 1 and 2 in which said public network ATM includes parts performing policing functions of data traffic of each user of said public network ATM, **characterized by** the fact to include, for said input access node (AN) of said public network of the ATM type receiving said ATM cell of the FRM type indicating a confirmation of acceptance of the reservation request for transmission bandwidth previously made, the following step:
- signalling to said parts performing policing functions of data traffic, the occurred allocation of transmission bandwidth along the virtual channel connections (VCC) previously set-up.

8. Method according to claim 7, **characterized by** the fact that said signalling step of the occurred allocation of transmission bandwidth to said parts performing policing functions is made, by said input access node (AN), through sending of an ATM cell of the FRM type indicating the value of the allocated transmission bandwidth.

9. Method according to claim 2, **characterized by** the fact to include, for each user of said virtual private network (AVPN) abutted to an input access node (AN) of said public network ATM going to stop the transmission of data towards another user of said virtual private network (AVPN) abutted to another access egress node (EN) of said network ATM, the following steps:
- sending, by the user network (CPN1) to which the user is abutted an ATM cell of the FRM type indicating a request for release of transmission bandwidth toward said input access node (AN);
- sending, by said input access node (AN), toward a first transit node (TN1) placed between said access node (AN) and said egress node (EN), said ATM cell of the FRM type indicating a request for release of transmission bandwidth and update, adding the value of transmission bandwidth released, the bandwidth value temporarily available on the virtual connection (VPL) which said virtual channel connection (VCC) belongs to;
- for all transit nodes (TN2, TN3, ..., TNn) along the virtual path (VPL) connecting said first transit node (TN1) to said egress node (EN), sending, by a transit node, toward a next node of the ATM cell of the FRM type indicating a request for release of transmission bandwidth and update, adding the value of transmission bandwidth released, the bandwidth value temporarily available on the virtual path connection (VPL) which said virtual channel connection (VCC) belongs to;
- sending, by said egress node (EN), backward to all the nodes (TNn, TNn-1, .., TN1,AN) previously crossed by said ATM cell of the FRM type indicating a request for release of transmission bandwidth, an ATM cell of the FRM type indicating the confirmation of release of the transmission bandwidth;
- for all the nodes (EN, TNn, TNn-1, ..., TN1, AN) crossed by said ATM cell of the FRM type indicating a confirmation for release of the transmission bandwidth, making this transmission bandwidth release effective.

10. Method according to claim 9. in which said public ATM network includes parts performing traffic policing functions on data of each user of said ATM public network, **characterized by** the fact to include, for said input access node (AN) of said public network of the ATM type receiving said ATM cell of the FRM type indicating a confirmation for the release of transmission bandwidth, the following step:
- signalling to said parts performing policing functions of data traffic of the occurred released of transmission bandwidth along the virtual channel connections (VCC) previously set-up.

11. Method according to claim 10 **characterized by** the fact that said step to signal the transmission bandwidth release completed to said parts performing policing functions is made, by said input access node (AN), through sending of an ATM cell of the FRM type indicating the value of the transmission bandwidth released.

12. Method according to claim 9, **characterized by** the fact that said input access node (AN), after sending said ATM cell of the FRM type indicating a request for transmission bandwidth release, performs the following steps:
- setting said second time-out;
- checking the arrival of a response message consisting of an ATM cell of the FRM type indicating a release confirmation of the transmission bandwidth;
- for a pre-set number of times, in case of non arrival of said response message at the end of said second time-out, re-transmitting said ATM cell of the FRM type indicating a request for the release of the transmission bandwidth.

13. Method according to claim 12, **characterized by** the fact that said second time-out has a value equal to the maximum Round Trip Delay.

14. Method according to claims 1 to 13, **characterized by** the fact that said access nodes (AN, TN1, TN2,..., TNn, EN) of said public network ATM send all the ATM cells of the FRM type toward a relevant server device (FRMU) at least, that said server (FRMU) processes all the messages concerning said virtual private network (AVPN) carried by said ATM cells of the FRM type, and that said server (FRMU) sends again ATM cells of the FRM type containing messages concerning said virtual private network (AVPN) toward the relevant access node (ATM_N).

## Patentansprüche

1. Methode für die Steuerung in Echtzeit von Ressourcen in einem virtuellen privaten ATM-Netzwerk (AVPN) durch Verbinden einer Mehrzahl von örtlichen Benutzer-Netzwerken (CPN1, CPN2,...CPNn) mit Standorten, die, aus geographischer Sicht gesehen, sogar sehr weit voneinander entfernt sein können, und jedes an einen Zugangsknoten (AN) eines öffentlichen ATM-Netzes stößt, dessen Informationen, die für die verschiedenen Dienste relevant sind, als Informationsfelder mit fester Länge, ATM-Zellen genannt, eingerichtet werden, und genanntes virtuelles privates Netzwerk (AVPN) konfiguriert ist als ein komplett verkettetes Netz von Verbindungen über virtuelle Kanäle (VCC), die wiederum aus virtuellen Links (VCL) bestehen, wobei genannte Links von virtuellen Kanälen (VCL) gebündelt sind, zwischen verschiedenen Knotenpaaren (AN) und Ausgangsknoten (EN) in Links virtueller Pfade (VPL) durch Transit-Knoten (TN) und eine Übertragungsbandbreite, die zwischen dem Benutzer des virtuellen privaten Netzwerkes (AVPN) und der Verwaltungsgesellschaft des öffentlichen ATM-Netzes vereinbart wird, die an genannten Links virtueller Pfade (VPL) reserviert ist, **dadurch gekennzeichnet, daß** sie für jeden Benutzer des genannten virtuellen privaten Netzwerkes (AVPN), der an einen Eingabe-Zugangsknoten (AN) des genannten öffentlichen ATM-Netzes stößt und beabsichtigt, Daten mit einer vorgegebenen Übertragungsbandbreite (BAND_REQ) an einen anderen Benutzer des genannten virtuellen privaten Netzwerkes (AVPN) zu übertragen, das an einen anderen Ziel-Zugangsknoten (EN) des genannten öffentlichen ATM-Netzwerkes stößt, folgende Schritte umfaßt:
- das Senden mittels des Benutzer-Netzwerks (CPN1), an das sich der Benutzer anknüpft, einer ATM-Zelle eines Protokolls des schnellen Ressourcen-Managements, im folgenden FRM genannt, und unterstützt durch das genannte öffentliche ATM-Netzwerk, unter Angabe einer Reservierungsanfrage für die Übertragungsbandbreite zu genanntem Eingabe-Zugangsknoten (AN); genannte ATM-Zelle vom Typ FRM enthält eine Information (BAND_REQ), die auf den Wert der angeforderten Übertragungsbandbreite hinweist;
- das Starten der Übertragung von Daten erst nach Erhalt einer ATM-Zelle vom Typ FRM, die eine Bestätigung für die Annahme der obengenannten Anfrage von allen Elementen des Netzwerkes (AN, TN, EN) meldet, die an der Verbindung beteiligt sind.

2. Methode gemäß Anspruch 1, **dadurch gekennzeichnet, daß** sie folgende Schritte vorsieht:
- das Durchführen, durch genannten Eingabe-Zugangsknoten (AN), eines Reservierungsversuchs für einen Wert der Übertragungsbandbreite gleich genannten Wertes (BAND_REQ) der Übertragungsbandbreite, der für die Verbindung über den virtuellen Kanal (VCC) erforderlich ist, zu dem genannte Zelle gehört, die eine Reservierungsanfrage für die Übertragungsbandbreite meldet;
- falls die Reservierung infolge einer ausreichenden Verfügbarkeit der Übertragungsbandbreite erfolgt, das Senden, durch genannten Eingabe-Zugangsknoten (AN), zu einem ersten Transit-Knoten (TN1), der zwischen genannten Zugangsknoten (AN) und genannten Ausgangsknoten (EN) positioniert ist, genannter ATM-Zelle vom Typ FRM, die eine Anfrage für die Reservierung der Übertragungsbandbreite angibt, und das Aktualisieren des Bandbreitenwertes, der an der Verbindung über den virtuellen Pfad (VPL) vorläufig verfügbar ist, zu dem genannte Verbindung über den virtuellen Kanal (VCC) gehört, wobei genannter Wert der erforderlichen Übertragungsbandbreite (BAND_REQ) subtrahiert wird;
- für alle Transit-Knoten (TN2, TN3, ..., TNn) entlang des virtuellen Pfades (VPL), die genannten ersten Transit-Knoten (TN1) mit genannten Ausgangsknoten (EN) verbinden, wenn die Reservierung infolge ausreichender Übertragungsbandbreiten-Verfügbarkeit erfolgt, das Senden, durch einen Transit-Knoten zu einem nachfolgenden Knoten, genannter ATM-Zelle vom Typ FRM, die eine Reservierungsanfrage für die Übertragungsbandbreite angibt, und das Aktualisieren des vorläufig verfügbaren Bandbreitenwertes an der Verbindung über den virtuellen Pfad (VPL), zu welchem genannte Verbindung über den virtuellen Kanal (VCC) gehört, durch Subtrahieren des genannten Wertes der angeforderten Übertragungsbandbreite (BAND_REQ);
- das Senden, durch genannten Ausgangsknoten (EN), rückwärts zu allen Knoten (Tn1, TNn-1, ....,TN1, AN), die zuvor von genannter ATM-Zelle vom Typ FRM durchquert wurden, unter Angabe einer Reservierungsanfrage für die Übertragungsbandbreite, einer ATM-Zelle vom Typ FRM, die die Bestätigung für die Annahme der zuvor erfolgten Reservierung der Übertragungsbandbreite meldet;
- für alle Knoten (EN, TNn, TNn-1..., TN1, AN), die von genannter ATM-Zelle vom Typ FRM durchquert werden, das Wirksammachen dieser Reservierung der Übertragungsbandbreite, wobei eine Bestätigung für die Reservierung der Übertragungsbandbreite gemeldet wird; und
- das Starten der Datenübertragungen zum Benutzer-Netzwerk (CPNn), das an genannten Zugangsknoten (EN) des Ausgangs längs der Verbindung über den virtuellen Pfad (VPL) stößt, wobei letztere durch zuvor hergestellte Verbindungen über den virtuellen Kanal (VCC) festgelegt wird.

3. Methode gemäß den Ansprüchen 1 und 2, **dadurch gekennzeichnet, daß** sie für jeden Knoten (AN,TN1,TN2, ..., TNn, EN) des genannten öffentlichen Netzes vom Typ ATM, der genannte ATM-Zelle vom Typ FRM empfängt, die eine Anfrage für die Reservierung der Übertragungsbandbreite angibt, folgenden Schritt enthält:
- im Falle von Nichtreservierung wegen Nichtverfügbarkeit der Übertragungsbandbreite, das Zurücksenden zum Knoten, welcher zuvor genannte ATM-Zelle vom Typ FRM gesendet hat, die eine Reservierungsanfrage für die Übertragungsbandbreite angibt, einer ATM-Zelle vom Typ FRM, die eine Ablehnung der Reservierungsanfrage für die Übertragungsbandbreite meldet.

4. Methode gemäß Anspruch 3, **dadurch gekennzeichnet, daß** sie für jeden Zugangsknoten (AN) des genannten öffentlichen Netzes vom Typ ATM, der genannte ATM-Zelle vom Typ FRM mit der Angabe einer Reservierungsanfrage für die Übertragungsbandbreite empfängt, folgenden Schritt enthält:
- im Falle von Nichtreservierung wegen Nichtverfügbarkeit der Übertragungsbandbreite, das Wiederholen, bis zu einer vorgewählten Anzahl neuer Versuche, des Versuches für die Reservierung der Übertragungsbandbreite am Ende einer ersten voreingestellten Zeitsperre vor dem Zurücksenden zum örtlichen Benutzer-Netzwerk der genannten ATM-Zelle vom Typ FRM, die eine Ablehnung der Reservierungsanfrage für die Übertragungsbandbreite meldet.

5. Methode gemäß Anspruch 3, **dadurch gekennzeichnet, daß** genannter Eingabe-Zugangsknoten (AN), nachdem er genannte ATM-Zelle vom Typ FRM mit der Angabe einer Reservierungsanfrage für Übertragungsbandbreite gesendet hat, die folgenden Schritte ausführt:
- das Einstellen einer zweiten Zeitsperre ;
- das Prüfen der Ankunft einer Antwortmeldung, die aus einer ATM-Zelle vom Typ FRM besteht, die eine Bestätigung für die Annahme der zuvor erfolgten Reservierung der Übertragungsbandbreite meldet, oder aus einer ATM-Zelle vom Typ FRM, die eine Ablehnung der Reservierungsanfrage für die Übertragungsbandbreite meldet;
- für eine voreingestellte Anzahl von Wiederholungen, im Falle der Nichtankunft genannter Antwortmeldung am Ende der genannten zweiten Zeitsperre, das erneute Übermitteln genannter ATM-Zelle vom Typ FRM, die eine Reservierungsanfrage für die Übertragungsbandbreite angibt.

6. Methode gemäß Anspruch 5, **dadurch gekennzeichnet, daß** genannte zweite Zeitsperre einen Wert gleich der maximalen Umlaufverzögerung hat.

7. Methode gemäß der Ansprüche 1 und 2, in welcher genanntes öffentliches ATM-Netz Teile beinhaltet, die Überwachungsfunktionen im Datenverkehr von jedem Benutzer des genannten öffentlichen ATM-Netzes ausführen, **dadurch gekennzeichnet, daß** sie, für genannten Eingabe-Zugangsknoten (AN) des genannten öffentlichen Netzes vom Typ ATM, der genannte ATM-Zelle vom Typ FRM empfängt, die eine Bestätigung für die Annahme der zuvor erfolgten Reservierungsanfrage für die Übertragungsbandbreite angibt, den folgenden Schritt umfaßt:
- das Melden an genannte Teile, die Überwachungsfunktionen im Datenverkehr ausführen, der erfolgten Zuteilung der Übertragungsbandbreite längs der zuvor hergestellten Verbindungen über den virtuellen Kanal (VCC).

8. Methode gemäß Anspruch 7, **dadurch gekennzeichnet, daß** genannter Meldeschritt der erfolgten Zuteilung der Übertragungsbandbreite zu genannten Teilen, die Überwachungsfunktionen ausführen, durch genannten Eingabe-Zugangsknoten (AN) erfolgt ist, mittels Senden einer ATM-Zelle vom Typ FRM, die den Wert der zugeteilten Übertragungsbandbreite angibt.

9. Methode gemäß Anspruch 2, **dadurch gekennzeichnet, daß** sie für jeden Benutzer des genannten virtuellen privaten Netzwerks (AVPN), das an einen Eingabe-Zugangsknoten (AN) des genannten öffentlichen ATM-Netzes stößt, welcher die Übertragung von Daten an andere Benutzer des genannten virtuellen privaten Netzwerkes (AVPN) stoppt, das an einen anderen Ausgabe-Zugangsknoten (EN) des genannten ATM-Netzwerkes stößt, folgende Schritte enthält:
- das Senden, durch das Benutzer-Netzwerk (CPN1), an das der Benutzer stößt, einer ATM-Zelle vom Typ FRM, die eine Freigabe-Anfrage für die Übertragungsbandbreite zu genanntem Eingabe-Zugangsknoten (AN) angibt;
- das Senden, durch genannten Eingabe-Zugangsknoten (AN), zu einem ersten Transit-Knoten (TN1), der zwischen genannten Zugangsknoten (AN) und genannten Ausgangsknoten (EN) positioniert ist, genannter ATM-Zelle vom Typ FRM, die eine Freigabe-Anfrage für die Übertragungsbandbreite angibt, und das Aktualisieren, durch Addieren des Wertes der freigewordenen Übertragungsbandbreite des vorläufig verfügbaren Bandbreitenwertes an der virtuellen Verbindung (VPL), zu welcher die genannte Verbindung über den virtuellen Kanal (VCC) gehört;
- für alle Transit-Knoten (TN2, TN3, ..., TNn) entlang des virtuellen Pfades (VPL), der genannten ersten Transit-Knoten (TN1) mit genanntem Ausgangsknoten (EN) verbindet, das Senden mittels eines Transit-Knotens zu einem nächsten Knoten, einer ATM-Zelle vom Typ FRM, die eine Freigabe-Anfrage für die Übertragungsbandbreite angibt, und das Aktualisieren durch Addieren des Wertes der freigewordenen Übertragungsbandbreite des vorläufig verfügbaren Bandbreitenwertes an der Verbindung über einen virtuellen Pfad (VPL), zu dem genannte Verbindung über den virtuellen Kanal (VCC) gehört;
- das Senden durch genannten Ausgangsknoten (EN) rückwärts zu allen Knoten (TNn, TNn-1, .., TN1,AN), die zuvor von genannter ATM-Zelle vom Typ FRM durchquert wurden, welche eine Freigabe-Anfrage der Übertragungsbandbreite angibt, einer ATM-Zelle vom Typ FRM, die die Bestätigung der Freigabe der Übertragungsbandbreite meldet;
- für alle Knoten (EN, TNn, TNn-1, ..., TN1, AN), die von genannter ATM-Zelle vom Typ FRM durchquert werden, welche eine Bestätigung für die Freigabe der Übertragungsbandbreite meldet, das Wirksammachen der Freigabe dieser Übertragungsbandbreite.

10. Methode gemäß Anspruch 9, in welcher das genannte öffentliche ATM-Netzwerk Teile umfaßt, die Verkehrsüberwachungsfunktionen an Daten von jedem Benutzer des genannten öffentlichen ATM-Netzes ausüben, **dadurch gekennzeichnet, daß** sie für genannten Eingabe-Zugangsknoten (AN) des genannten öffentlichen Netzes vom Typ ATM, das genannte ATM-Zelle vom Typ FRM empfängt, die eine Bestätigung für die Freigabe der Übertragungsbandbreite meldet, den folgenden Schritt enthält:
- das Melden an genannte Teile, die Überwachungsfunktionen am Datenverkehr ausüben, der erfolgten Freigabe der Übertragungsbandbreite längs der zuvor hergestellten Verbindungen über den virtuellen Kanal (VCC).

11. Methode gemäß Anspruch 10, **dadurch gekennzeichnet, daß** genannter Schritt zum Melden der vollendeten Freigabe der Übertragungsbandbreite an genannte Teile, die Überwachungsfunktionen ausüben, mittels genannten Eingabe-Zugangsknoten (AN) erfolgt, und zwar durch Senden einer ATM-Zelle vom Typ FRM, die den Wert der freigewordenen Übertragungsbandbreite angibt.

12. Methode gemäß Anspruch 9, **dadurch gekennzeichnet, daß** genannter Eingabe-Zugangsknoten (AN) nach dem Senden genannter ATM-Zelle vom Typ FRM, die eine Anfrage für die Freigabe der Übertragungsbandbreite angibt, folgenden Schritte ausführt:
- das Einstellen genannter zweiten Zeitsperre;
- das Kontrollieren der Ankunft einer Antwortmeldung, die aus einer ATM-Zelle vom Typ FRM besteht, welche eine Freigabebestätigung für die Übertragungsbandbreite meldet;
- das erneute Übertragen, so viele Male wie zuvor festgelegt, wenn genannte Antwortmeldung am Ende der genannten zweite Zeitsperre nicht ankommt, der genannten ATM-Zelle vom Typ FRM, die eine Freigabe-Anfrage für die Übertragungsbandbreite angibt.

13. Methode gemäß Anspruch 12, **dadurch gekennzeichnet, daß** genannte zweite Zeitsperre einen Wert gleich der maximalen Umlaufverzögerung hat.

14. Methode gemäß der Ansprüche 1 bis 13, **dadurch gekennzeichnet, daß** genannte Zugangsknoten (AN, TN1, TN2,..., TNn, EN) des genannten öffentlichen ATM-Netzes alle ATM-Zellen vom Typ FRM zu mindestens einer relevanten Server-Einrichtung (FRMU) senden, daß genannter Server (FRMU) alle Meldungen bezüglich des genannten virtuellen privaten Netzwerkes (AVPN), die von genannten ATM-Zellen vom Typ FRM übertragen werden, verarbeitet, und daß genannter Server (FRMU) wieder ATM-Zellen vom Typ FRM, die Meldungen bezüglich des genannten virtuellen privaten Netzwerkes (AVPN) enthalten, zum relevanten Zugangsknoten (ATM_N) sendet.

## Revendications

1. Méthode pour le contrôle en temps réel de ressources dans un réseau MTA (ATM) privé virtuel RPV MTA (AVPL) concernant plusieurs réseaux locaux utilisateurs REC1, REC2,..., RECNn (CPN1, CPN2,..., CPNn) situés dans des endroits même très éloignés entre eux du point de vue géographique, et chacun d'eux aboutissant à un noeud d'accès NA (AN) d'un réseau public MTA (ATM) dont les informations pertinentes aux différents services sont organisées comme unités d'informations, ayant une longueur fixée appelée cellules MTA (ATM), et ce réseau privé virtuel RPV MTA (AVPN) étant représenté comme un réseau entièrement maillé de connexions de canaux virtuels CCV (VCC), composée à leur tour par des liaisons virtuelles LCV (VCL), ces connexions de canaux virtuels CCV (VCC) étant groupées, entre différents paires de noeuds NA (AN) et noeuds de sortie DN (EN), en connexions d'acheminement virtuels LAV (VPL) au moyen de noeuds de transit (TN) et une largeur de bande de transmission agréée entre l'utilisateur du réseau privé virtuel RPV MTA (AVPL) et la société gérante du réseau public MTA (ATM) qui est réservée aux dites liaisons d'acheminements virtuels LAV (VPL), **caractérisée par** le fait d'inclure, pour chaque utilisateur du dit réseau privé virtuel RPV MTA (AVPN) aboutissant à un noeud d'accès d'entrée NA (AN) du dit réseau public MTA (ATM) aboutissant à un autre noeud d'accès de destination DN (EN) du dit réseau public MTA (ATM), les pas suivants:
- envoi, par le réseau utilisateur REC1 (CPN1) auquel l'utilisateur aboutit, d'une cellule MTA (ATM) d'un protocole Gestion Rapide des Ressources (Fast Resource Management), appelé dorénavant GRR (FRM) et supporté par ledit réseau public MTA (ATM), indiquant une demande de réservation pour largeur de bande de transmission vers ledit noeud d'accès d'entrée NA (AN), ladite cellule MTA (ATM) du type GRR (FRM) incluant une information (BAND_REQ) qui spécifie la valeur de la largeur de bande de transmission requise;
- démarrage de la transmission de données seulement après avoir reçu une cellule MTA (ATM) indiquant une confirmation d'acceptation de la demande ci-dessus mentionnée de tous les éléments du réseau (NA/AN, TN, DN/EN) concernés dans la connexion.

2. Méthode selon la revendication 1, **caractérisée par** le fait d'envisager les pas suivants:
- exécution, par ledit noeud d'accès NA (AN), d'un tentative de réservation d'une valeur de largeur de bande de transmission égale à ladite valeur (BAND_REQ) de largeur de bande de transmission requise pour la connexion du canal virtuel CCV (VCC) auquel ladite cellule, indiquant une demande de réservation pour largeur de bande de transmission, appartient;
- dans le cas où la réservation sera faite à la suite d'une suffisante disponibilité de la largeur de bande de transmission, envoi par ledit noeud d'accès d'entrée NA (AN) vers un premier noeud de transit (TN1) situé entre ledit noeud d'accès NA (AN) et ledit noeud de sortie DN (EN), de ladite cellule MTA (ATM) du type GRR (FRM) indiquant une demande de réservation pour largeur de bande de transmission et mise à jour de la valeur de largeur de bande temporairement disponible sur la liaison d'acheminement virtuel LAV (VPL), à laquelle ladite connexion de canal virtuel CCV (VCC) appartient, par soustraction de ladite valeur de largeur de bande de transmission requise (BAND_REQ);
- pour tous les noeuds de transit (TN2, TN3,..., TNn) le long de l'acheminement virtuel LAV (VPL) reliant le premier noeud de transit (TN1) au dit noeud de sortie DN (EN), en cas de réservation effectuée à la suite d'une disponibilité suffisante de largeurs de bande de transmission, envoi par un noeud de transit vers un noeud successif de ladite cellule MTA (ATM) du type GRR (FRM) indiquant une demande de réservation pour largeur de bande de transmission et mise à jour de la valeur de largeur de bande temporairement disponible sur la liaison d'acheminement virtuel LAV (VPL) à laquelle ladite connexion de canal virtuel CCV (VCC) appartient, par soustraction de ladite valeur de largeur de bande de transmission requise (BAND_REQ);
- envoi de retour par ledit noeud de sortie DN (EN) vers tous les noeuds (Tn1, TNn-1,..., TN1, NA/AN) précédemment traversés par ladite cellule MTA (ATM) du type GRR (FRM) indiquant une demande de réservation pour largeur de bande de transmission, d'une cellule MTA (ATM) du type GGR (FRM) indiquant la confirmation d'acceptation de la réservation précédemment effectuée de la largeur de bande de transmission;
- entrée en vigueur de cette réservation de largeur de bande de transmission pour tous les noeuds (DN/EN, TNn, TNn-1,..., TN1, NA/AN) traversés par ladite cellule TAM (ATM) du type GGR (FRM) indiquant une confirmation d'acceptation de réservation de largeur de bande de transmission, et
- démarrage des transmissions des données vers le réseau utilisateur RECn (CPNn) aboutissant au dit noeud d'accès de sortie DN (EN) le long de la liaison d'acheminement virtuel LAV (VPL) définie par les connexions des canaux virtuels CCV (VCC) précédemment préparées.

3. Méthode selon les revendications 1 et 2, **caractérisée par le fait qu'**elle inclut, pour chaque noeud (NA/AN, TN1, TN2,..., TNn, DN/EN) du dit réseau public du type MTA (ATM) qui reçoit ladite cellule MTA (ATM) du type GRR (FRM) indiquant une demande de réservation pour largeur de bande de transmission, les pas suivants:
- dans le cas de non-réservation à cause d'une indisponibilité de largeur de bande de transmission, renvoi vers le noeud qui avait précédemment envoyé ladite cellule MTA (ATM) du type GRR (FRM), indiquant une demande de réservation pour largeur de bande de transmission, d'une cellule MTA (ATM) du type GGR (FRM) indiquant un refus d'acceptation de la demande de réservation pour largeur de bande de transmission.

4. Méthode selon la revendication 3, **caractérisée par le fait qu'**elle inclut, pour chaque noeud d'accès NA (AN) du dit réseau public du type MTA (ATM) qui reçoit ladite cellule MTA (ATM) du type GRR (FRM) indiquant une demande de réservation pour largeur de bande de transmission, le pas suivant:
- dans le cas de non-réservation à cause d'une indisponibilité de largeur de bande de transmission, une réitération, jusqu'à un nombre préétabli de nouveaux tentatives, du tentative de réservation de largeur de bande de transmission au bout d'un premier temps disponible préétabli avant de renvoyer au réseau local utilisateur ladite cellule MTA (ATM) du type GRR (FRM). indiquant un refus d'acceptation de la demande de réservation pour largeur de bande de transmission.

5. Méthode selon la revendication 3, **caractérisée par le fait que** ledit noeud d'accès d'entrée NA (AN), après avoir envoyé ladite cellule MTA (ATM) du type GRR (FRM) indiquant une demande pour largeur de bande de transmission, exécute les pas suivants:
- chargement d'un deuxième délai d'attente;
- vérification de l'arrivée d'un message de réponse qui consiste en une cellule MTA (ATM) du type GRR (FRM) indiquant une confirmation d'acceptation de la réservation de largeur de bande de transmission transmise précédemment, ou une cellule MTA (ATM) du type GGR (FRM) indiquant un refus d'acceptation de la demande de réservation de largeur de bande de transmission ;
- pour un nombre préétabli de fois, en cas de non-arrivée de ce message de réponse au bout du dit deuxième délai d'attente, retransmission de ladite cellule MAT (ATM) du type GGR (FRM) indiquant une demande de réservation pour largeur de bande de transmission.

6. Méthode selon la revendication 5, **caractérisée par le fait que** ledit deuxième délai d'attente a une valeur égale au Délai d'Allée et Retour maximum.

7. Méthode selon les revendications 1 et 2 où ledit réseau public MTA (ATM) inclut des parties qui exécutent des fonctions de contrôle du trafic de données de chaque utilisateur du dit réseau public MTA (ATM), **caractérisée par le fait qu'**elle inclut, pour ledit noeud d'accès d'entrée NA (AN) du dit réseau public du type MTA (ATM) recevant ladite cellule MTA (ATM) du type GGR (FRM) indiquant une confirmation d'acceptation de la demande de réservation pour la largeur de bande de transmission transmise précédemment, le pas suivant:
- signalisation, aux dites parties exécutant des fonctions de contrôle du trafic de données, de la réalisation de l'allocation de la largeur de bande de transmission le long des connexions des canaux virtuels CCV (VCC) précédemment établies.

8. Méthode selon la revendication 7, **caractérisée par le fait que** ledit pas de signalisation de réalisation de l'allocation de largeur de bande de transmission aux dites parties exécutant des fonctions de contrôle a été exécuté par ledit noeud d'accès d'entrée NA (AN) au moyen de l'envoi d'une cellule MTA (ATM) du type GRR (FRM) indiquant la valeur de la largeur de bande de transmission allouée.

9. Méthode selon la revendication 2, **caractérisée par le fait qu'**elle inclut, pour chaque utilisateur du dit réseau privé virtuel RPV MTA (APVN) aboutissant à un noeud d'accès d'entrée NA (AN) du dit réseau public MTA (ATM) qui va arrêter la transmission de données vers un autre utilisateur du dit réseau privé virtuel RPV MTA (APVN) aboutissant à un autre noeud de sortie d'accès DN (EN) du dit réseau MTA (ATM), les pas suivants:
- envoi, par le réseau utilisateur REC1 (CPN1) auquel l'utilisateur aboutit, d'une cellule MTA (ATM) du type GRR (FRM) indiquant une demande de libération de largeur de bande de transmission vers ledit noeud d'accès d'entrée;
- envoi, par ledit noeud d'accès d'entrée NA (AN), vers un premier noeud de transit (TN1) situé entre ledit noeud d'accès NA (AN) et ledit noeud de sortie DN (EN), de ladite cellule MTA (ATM) du type GRR (FRM) indiquant une demande de libération de largeur de bande de transmission et de mise à jour, par addition de la valeur de la largeur de bande de transmission libérée, de la valeur de largeur de bande temporairement disponible sur la connexion virtuelle LAV (VPL) à laquelle la dite connexion de canal virtuel CCV (VCC) appartient;
- pour tous les noeuds de transit (TN2, TN3, ..., TNn) le long du chemin virtuel LAV (VPL) reliant ledit premier noeud de transit (TN1) au dit noeud de sortie DN (EN), envoi par un noeud de transit vers un noeud prochain de la cellule MTA du type GRR (FRM) indiquant une demande de libération de largeur de bande de transmission et de mise à jour, par addition de la valeur de la largeur de bande de transmission libérée, de la valeur de largeur de bande temporairement disponible sur la connexion de chemin virtuel LAV (VPL) à laquelle ladite connexion de canal virtuel CCV (VCC) appartient;
- renvoi, par ledit noeud de sortie DN (EN) à tous les noeuds (TNn, TNn-1, ..., TN1, NA/AN) précédemment traversés par ladite cellule MTA (ATM) du type GRR (FRM) indiquant une demande de libération de largeur de bande de transmission, d'une cellule MTA (ATM) du type GRR (FRM) indiquant la confirmation de libération de la largeur de bande de transmission;
- pour tous les noeuds (DN/EN, TNn, TNn-1,..., TN1, NA/AN) traversés par ladite cellule MTA (ATM) du type GRR (FRM) indiquant une confirmation de libération de la largeur de bande de transmission et rendant ainsi effective la libération de cette largeur de bande de transmission.

10. Méthode selon la revendication 9, où ledit réseau public MTA (ATM) inclut des parties qui exécutent des fonctions de contrôle sur les données de chaque utilisateur du dit réseau public MTA (ATM), **caractérisée par le fait qu'**elle inclut, pour ledit noeud d'accès d'entrée NA (AN) du dit réseau public du type MTA (ATM) recevant ladite cellule MTA (ATM) du type GRR (FRM) indiquant une confirmation pour la libération de la largeur de bande de transmission, le pas suivant:
- signalisation aux dites parties, qui exécutent des fonctions de contrôle du trafic de données, de la libération réalisée de la largeur de bande de transmission le long des connexions des canaux virtuels CCV (VCC) précédemment établies.

11. Méthode selon la revendication 10, **caractérisée par le fait que** ledit pas pour signaler l'accomplissement de la libération de la largeur de bande de transmission aux dites parties qui exécutent des fonctions de contrôle est accompli par ledit noeud d'accès d'entrée NA (AN) par l'envoi d'une cellule MTA (ATM) du type GRR (FRM) indiquant la valeur de la largeur de bande de transmission libérée.

12. Méthode selon la revendication 9, **caractérisée par le fait que** ledit noeud d'accès d'entrée NA (AN), après l'envoi de ladite cellule MTA (ATM) du type GRR (FRM) indiquant une demande de libération de largeur de bande de transmission, exécute les pas suivants:
- chargement d'un deuxième délai d'attente;
- vérification de l'arrivée d'un message de réponse, représenté par une cellule MTA (ATM) du type GRR (FRM) indiquant une confirmation de libération de la largeur de bande de transmission;
- pour un nombre préétabli de fois, en cas de non-arrivée du dit message de réponse au bout du dit deuxième délai d'attente, retransmission de ladite cellule MTA (ATM) du type GRR (FRM) indiquant une demande de libération de la largeur de bande de transmission.

13. Méthode selon la revendication 12, **caractérisée par le fait que** ledit deuxième délai d'attente a une valeur égale au Délai d'Allée et Retour maximum.

14. Méthode selon les revendications de 1 à 13, **caractérisée par le fait que** lesdits noeuds d'accès (NA/AN, TN1, TN2,..., TNn, DN/EN) du dit réseau public MTA (ATM) envoient toutes les cellules MTA (ATM) du type GRR (FRM) vers un dispositif serveur pertinent UGRR (FRMU) au moins, que ledit serveur UGRR (FRMU) traite tous les messages concernant ledit réseau privé virtuel RPV MTA (AVPN) emportés par lesdites cellules MTA (ATM) du type GRR (FRM), et que ce serveur UGRR (FRMU) envoie de nouveau les cellules MTA (ATM) du type GRR (FRM), contenant des messages qui concernent ledit réseau privé virtuel RPV MTA (AVPN), vers le noeud d'accès pertinent.
